Europäisches Patentamt

(19) European Patent Office

Office européen des brevets

(11) Publication number: **0 017 053**
**B1**

(12) **EUROPEAN PATENT SPECIFICATION**

(45) Date of publication of patent specification: **19.10.83**  (51) Int. Cl.³: **B 23 C 3/35**

(21) Application number: **80101345.9**

(22) Date of filing: **14.03.80**

(54) Key copying machine.

(30) Priority: **20.03.79 IT 335279**

(43) Date of publication of application:
**15.10.80 Bulletin 80/21**

(45) Publication of the grant of the patent:
**19.10.83 Bulletin 83/42**

(84) Designated Contracting States:
**DE FR GB**

(56) References cited:
**DE - B - 1 953 911**
**FR - A - 2 375 942**
**US - A - 2 038 949**
**US - A - 2 176 106**

(73) Proprietor: **C.I.S.A. Costruzioni Italiane Serrature Affini S.p.A.**
**Via Oberdan, 42**
**I-48018 Faenza (Ravenna) (IT)**

(72) Inventor: **Errani, Deo**
**Via Cavour, 44/1**
**Faenza (Province of Ravenna) (IT)**

(74) Representative: **Josif, Albert**
**UFFICIO INTERNAZIONALE BREVETTI Via Meravigli 16**
**I-20123 Milan (IT)**

Courier Press, Leamington Spa, England.

## Key copying machine

This invention relates to a key copying machine, with which a rotating cutter operated by an electric motor cuts into a blank key a profile which is equal to that of a sample key and which is sensed by a feeler, said keys being locked on to a support. The keys may be coaxially locked on the support.

With such copying machines, the support is moved manually so that the feeler follows the profile of the sample key to be copied, while the cutter reproduces this profile on the blank key.

In known machines, there is the disadvantage that at the moment of impact between the cutter and the blank key, the feeler has not yet become properly engaged between the teeth of the sample key, so that the cutter tends to move laterally. In addition the reproduced key comprises sharp edges in the zone between the profiled teeth, and these act on the revolving plugs of the lock. This is responsible for the well known difficulty to which reproduced keys are subject, namely of making lock opening difficult because these sharp edges tend to jam during key rotation.

It should be noted that the above mentioned undesired sharp edges may be present both on lateral surfaces delimiting the key notches and also on the bottom surface of the key notches.

Different attempts have been already made to remove the drawbacks regarding the above mentioned sharp edges on the bottom surface of the key notches by providing means which allow an adequate relative movement between the cutter and the sample key to be performed. Such relative movement is normally a composite movement comprising translatory movement components along different axes perpendicular to each other and rotatory movements about different axes differently positioned to each other.

Such relative movements allow also to obtain selectively shaped bottom surfaces of the key notches.

It has heretofore been believed that it is technically more advantageous if such composite movements are performed mainly by the support for the keys while maintaining the cutter unit and the feeler stationary since both the construction and the hand operation was believed to be simpler and more efficient in this way.

Attempts have also been made to select for the feeler a circular shape corresponding to the circular shape of the cutter to facilitate removal of the sharp edges on the bottom surfaces of the key notches, and to facilitate the relative movement between the circular feeler edge and the notch surface of the sample key. A key copying machine of this type is disclosed in FR—A—2 375 942.

In order to remove the drawback regarding the sharp edges on the lateral surfaces of the key notches especially for those types of keys in which the notches or grooves have parallel side surfaces so that the width of the slot remains constant, attempts have also been made by the Applicant to use circular feelers having zones with different thicknesses so that for each groove width of the key a suitable thickness zone of the feeler may be selected. However, while this type of feeler is only suitable for the keys with rectangular notches or teeth, the problem of the initial positioning is not obviated thereby, since at the instant at which the cutter begins to cut, the feeler does not penetrate sufficiently in the notch so that possible drift effects are not prevented. To obviate this, attempts have also been made to render the feeler expandable through spring action and guided from an expanded position projecting forwardly with respect to the cutter to a retracted position in which the feeler is aligned with respect to the cutter, so that the feeler engages the key notch in the projecting position before the cutter reaches its operative position and is then urged in its retracted position against spring action to allow action of the cutter when the circular feeler attains its retracted · position, thereby guiding the movement of the cutter into its operative position. This solution has however the drawback that the resilient and slidable guiding of the feeler cannot guarantee such high precision quality of key reproduction as is frequently required in industrial key reproduction techniques, in addition to the fact that the resilient feeler support is subject to high local stresses owing to small guiding surface areas, which entails wear, undesirable play thereof, and an insufficiently firm holding thereof, especially in the expanded position of the feeler in which the positioning is most important. In addition, when the feeler has to be shifted from one notch into the other of the sample key, it is necessary to remove the feeler from the notch over a distance which is greater than the sum of the depth of the notch and the spring biased excursion stroke of the feeler, which renders the hand operation of the machine more difficult and easily deceives the operator, who may attempt to shift the cutter unit sidewards, while the expandable feeler is still within the key notch, thereby deformation of the feeler may easily occur especially when a small thickness of the feeler has been selected.

The object of the invention is to obviate all above mentioned shortcomings.

During his inventive activity the Applicant has found that the belief is wrong, according to which the composite relative movements between the cutter unit and the key support should mainly be conferred to the key support by allowing such support to perform all the composite rotatory and translatory movements and maintaining stationary the feeler and the cutter units. It has been in fact found that by selecting appropriate structural features the operability and performance of the machine is improved if both the translatory and angular movements are conferred to the cutter and feeler assembly.

The key copying machine according to the invention, which includes an electric motor operated cutter unit with a supporting frame therefor, an adjustable feeler assembly, and a support facing said cutter unit and said feeler assembly and having means for clamping thereon the blank key and the sample key and wherein means are provided allowing relative movement between said support and said cutter unit and feeler assembly and wherein the feeler of said feeler assembly senses the shape of said sample key and defines thereby the copying action of the cutter, is characterized in that said feeler assembly has supporting means allowing at least an angular movement of the feeler assembly independent within limits from the cutter unit and its supporting frame and in that contact between the cutter and the blank key and between the feeler and the sample key is achieved by respective angular movements of the supporting frame and the feeler assembly relative to the machine base, allowing the feeler to engage with the sample key before engagement of the cutter and the blank key.

Preferred features of the machine according to this invention are outlined in claims 2 through 8 attached to this specification.

The characteristics of the present invention will be more apparent from the detailed description of a preferred embodiment of the key copying machine, illustrated by way of example in the accompanying drawings in which:

Figure 1 is a front view of the machine according to the embodiment;

Figure 2 is a partly sectional side view thereof;

Figure 3 is a plan view thereof;

Figure 4 is an elevation thereof taken in longitudinal section on the line IV—IV of Figure 3.

These figures show the quadrangular base 1 of the machine.

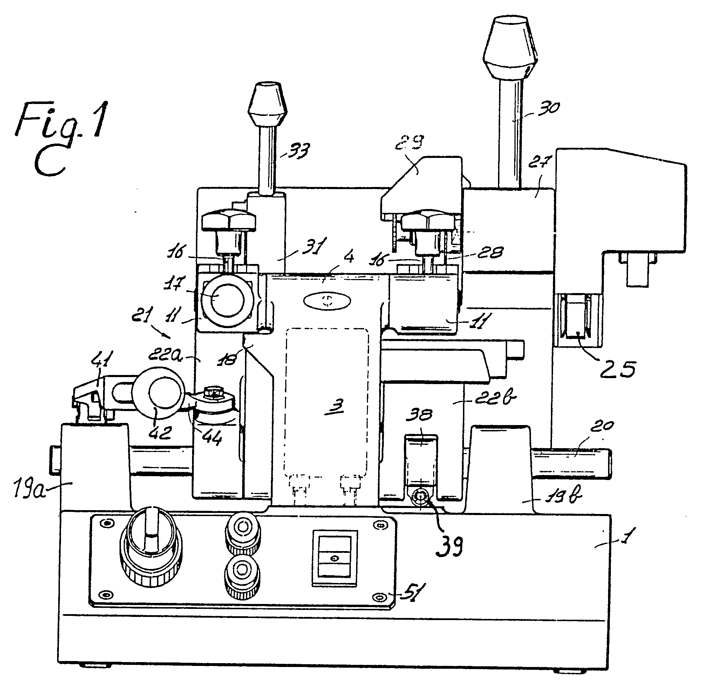

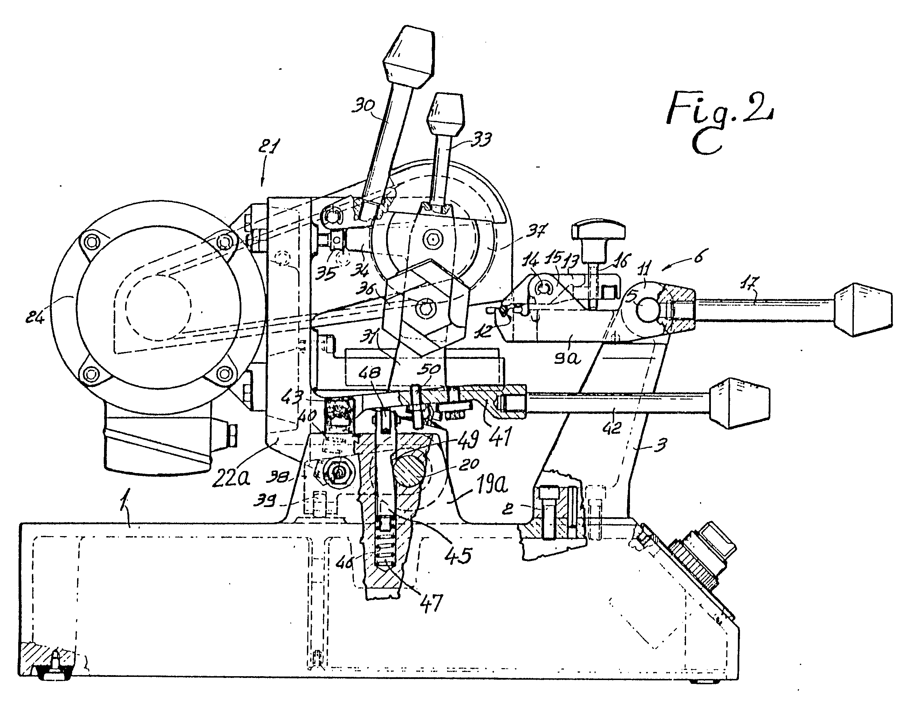

An upright 3 is fixed by screw means 2 in a central position of the front or operating side of the base, and comprises at its upper end a sleeve 4 (Figure 1) which rotatably supports a through pin 5 (Figure 2) with its axis horizontal and parallel to the front side of the base and to the axis of rotation of the cutter 28.

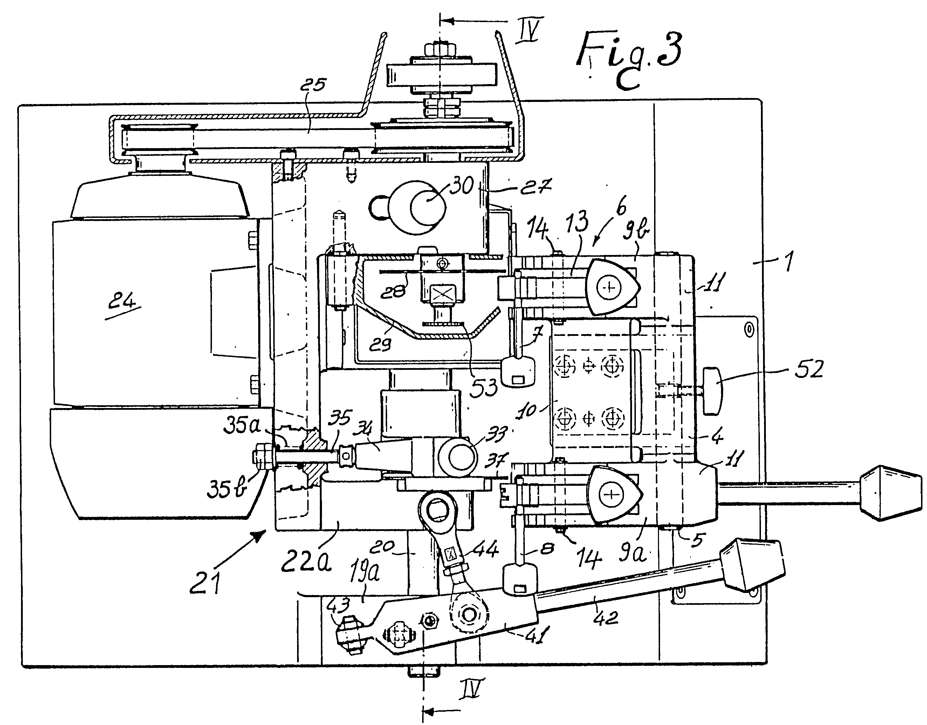

A support 6 for a blank key 7 (Figure 3) and a sample key 8 is hinged on the pin 5. The support 6 is formed from a pair of brackets 9a, 9b orthogonal to the pin 5 and joined together by a bridge 10. At one end, the brackets comprise respective bush formations 11, for mounting on the portions of the pin 5 which project from the sleeve 4.

The support 6 is fixed on the pin 5 by means of a screw 52 the tip of which engages in an annular groove 5' provided in the pin 5 thereby preventing lateral movements of the support 6.

Respective aligned grooves 12 parallel to the axis of the pin 5 are provided at the free ends of the brackets 9a, 9b for supporting the shank of the keys 7, 8. The keys are locked on to the brackets 9a, 9b of the support 6 by respective clamps 13 constituted by rocker levers pivoted, with their axis parallel to the axis of the pin 5, on pins 14 mounted between lugs 15 of the brackets. The clamps 13 act on the keys by way of locking screws 16, the point of which acts against the respective bracket 9a, 9b. A grip 17 for manually rotating the support 6 is longitudinally fixed to the bracket 9a at the corresponding bush 11.

In the rest position, the support 6 rests substantially horizontally by the abutment of the flat bottom surface portion 9' of the bracket 9a against the horizontal surface of an enlarged portion 18 of the upright 3 (Figure 1). The bottom surface of the bracket 9a has an inclined portion, which abuts against portion 18 when the support 6 is upwardly rotated.

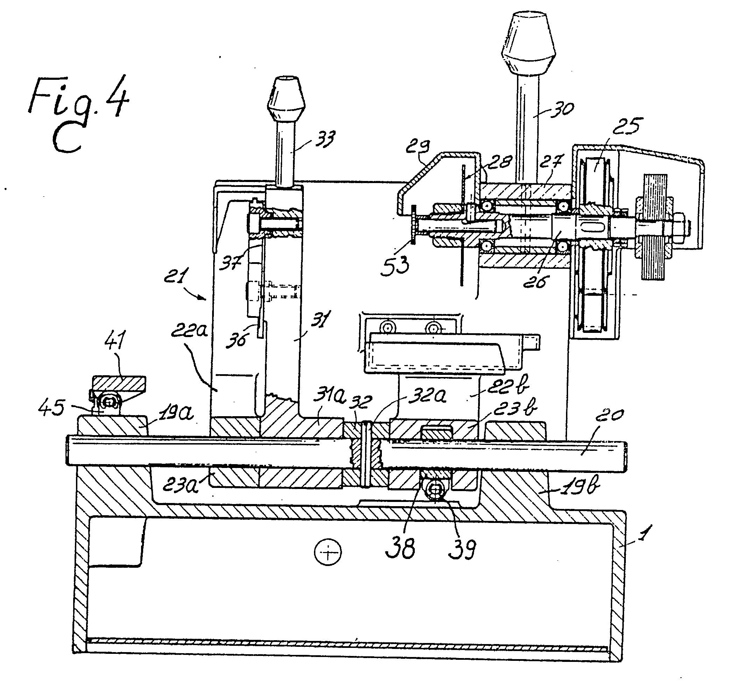

A pair of projections 19a, 19b extend upwards from the base 1, and comprise coaxial seats for slidably supporting a horizontal shaft 20 parallel to the pin 5. A frame 21 is swivel-mounted on the shaft 20, and is constituted by a plate provided with a pair of right angled arms 22a, 22b which at their free end comprise respective bushes 23a, 23b (Figure 4) for hinging the frame 21 on the shaft 20. On the rear of the swivel frame 21 there is mounted an electric motor 24 for driving, by means of a belt drive 25, a shaft 26 rotatably supported by revolving bearings in a sleeve 27 which projects forward from the swivel frame 21. A circular cutter 28 is keyed on to the shaft 26, and is of the type known in the key copying machine field. The cutter 28 is covered upperly for safety reasons by a casing 29 fixed to the frame 21. A lever 30 is fixed to the top of the frame for manually moving, i.e. rotating the frame forward and backward.

An arm 31 is mounted, by way of its hub 31a and a spacer 32, on the shaft 20 between the bushes 23a, 23b of the frame 21. A pin 32a radially traverses the spacer 32 and shaft 20, so that the frame 21 and arm 31 are rotatable on the shaft 20, but are locked axially on it. The arm 31 is normally disposed approximately vertically, and is provided at its upper end with a third lever 33 for manually rotating it. A stop 34 (Figure 3) projects transversely from the arm 31 towards the rear in proximity to its top, for abutment against the head of a bolt 35 screwed into the frame 21 (see also Figure 1). For the purpose appropriate abutment surfaces are provided on the bolt head 35 and on the stop head 34. In order to prevent the bolt 35 from rotating, a spring 35a is disposed between the frame 21 and a shoulder 35b formed from a nut and locking nut screwed on to the bolt 35. The head of the bolt is provided with radial bores to allow a suitable tool to be inserted, in order to adjust the point of abutment of the stop 34.

To the side of the arm 31 there is fixed a composite feeler comprising a lower portion 36 of regular polygonal profile (e.g. hexagonal, Figure 2) and an upper portion 37 of circular profile. The portions 36 and 37 lie in the same plane normal to the shaft 20, and the portion 37 is countershaped or cut out to receive part of the lower portion so that the front edge of the portions 36, 37 has no interruptions (Figure 2). The sides or segments of the lower portion 36 are of different thicknesses corresponding to those of the cutters and the spaces between the teeth i.e. widths of the notches of conventional keys.

In addition, the radius of curvature of the portion 37 is equal to that of the cutter 28, and the position of abutment of the stop 34 on the bolt 35 is adjusted such that the centre of the portion 37 is on the axis of the cutter 28. In such case the periphery of the circular feeler 37 and the cutter 28 lie both on a cylindrical surface the axis of which is parallel to the axis 5 of the support 6, so that the distance between the cutter and the blank key is equal to the distance between the feeler portion 37 and the sample key provided that such keys are correctly clamped on the support 6. If the keys are clamped in an offset position to each other, the cutter and the feeler portion 37 may be likewise offset to each other in order to obtain the above mentioned condition of distances, it being sufficient to adjust for the purpose the position of the bolt 35.

The bush 23b is of fork configuration for rotatably mounting on the shaft 20 an arm 38 carrying a roller 39 which rolls on a surface of the base. Between the arm 38 and frame 21 there is a spring 40 which provides a resilient support for the frame 21 when this is inclined backwards in its rest position.

The frame is moved axially by a lever 41 provided with a grip 42 for manual operation and hinged on the projection 19a by means of an articulated joint 43 which enables the lever 41 to rotate both in a horizontal and a vertical plane. One end of a tie rod 44 is pivoted to the lever 41, its other end being pivoted above the right angled arm 22a of the frame 21. The hinges which hinge the tie rod 44 to the arm 22a and lever 41 are of ball type to allow freedom of movement in all directions. The articulation is such as to leave arm 22a unaffected when lever 41 is rotated in a vertical plane and to entrain frame 21 through arm 22a in the direction of shaft 20 only when lever 41 is rotated in a horizontal plane. The lever 41 is flat so that it acts on a pin 45 which is inserted with its axis vertical, against a spiral spring 46, in a bore 47 provided in the projection 19a on the base. The pin 45 emerges from the bore 47 by means of its upper end, which is provided with a roller 48 by which it rests on the lower face of the lever 41. The bore 47 partly intersects the seat for the shaft 20, and correspondingly the pin 45 comprises a recessed bevel 49 the depth of which progressively increases from the bottom upwards, and in which the shaft 20 is engaged. A pin 50 screwed into the lever 41 and abutting against the projection 19a acts as a limit stop for the downward movement of the lever 41. The maximum depth of the bevelled recess 49 is so selected at its top, that in the maximum lowered position of the pin 45 there is no engagement with the shaft 20. The machine is provided at its front end with a panel on which the switches and controls for the machine motors are disposed.

The operation of the described machine is as follows. The blank key 7 and the sample key 8 are positioned and locked on the brackets 9a, 9b respectively of the support 6, by operating the locking screws 16 so as to tighten the lever clamps 13. The swivel frame 21 held in its upwardly tilted position, i.e. rested upon the spring 40 is then laterally positioned by operating the lever 41 until the cutter 28 is in front of the blank key 7, and the feeler 36, 37 correspondingly in front of the key sample 8. To do this, the lever 41 and thus the pin 45 must be lowered in order to free the shaft 20, which is otherwise locked by the wedge effect of the bevel 49 under the action of the spring 46. By keeping the lever 41 lowered and moving it in a horizontal plane, the swivel frame 21 can be moved laterally. It can then be exactly positioned by operating also the lever 33 of the arm 31 which during such operation is also rotated so as to move the lower feeler 36 between the teeth of the sample key thereby disengaging the stop 34 from the bolt 35, while the support 6 is maintained in its horizontal rest position with the surfaces 18 and 9' abutting against each other.

At this point, the lever 41 is released to again lock the longitudinal or lateral position of the swivel frame 21. By then operating the cutter 28, the blank key 7 can be cut by rotating the entire swivel frame 21 on the shaft 20 by means of the lever 30, until contact is obtained between the cutter and the blank key. This rotation, i.e. the depth of the cut, is controlled by the feelers 36, 37 supported on the arm 31 when the engagement of the frame bolt 35 with the stop 34 occurs again through the forward tilting of the frame 21.

The support 6 is rotated about the axis of the pin 5 by operating the grip 17, with contact between the cutter 28 and the blank key 7 and between the feeler and the sample key 8 always being maintained by the lever 30.

In particular, by rotating the support 6 the portion 37 is brought into contact with the sample key 8, so that the cutter 28 cuts a suitably rounded profile in the blank key 7.

Of fundamental importance in the described machine is the arrangement of the arm 31, which enables the cutter 28 to be brought into perfect alignment on the blank key without this operation being compromised, as in conventional copying machines, by the impact of the cutter with the key, which often causes the tool to move laterally, so damaging the tooth profile, and the key pattern. This danger is completely overcome in the described copier, in that after the portion 36 has penetrated between the teeth of the sample key, the shaft 20 is axially locked by the pin 45, so that the cutter can approach the blank blank while remaining in the same plane.

The lower portion 36 of the feeler can be easily rotated in order to change the thickness of the side which is to come into contact with the sample key according to the space between the key teeth. This thickness and that of the cutter are equal.

It will be appreciated that the bolt 35a can be always adjusted so that the distance of the edge of the feeler 36 or 37 to be operated from the sample key is equal to the distance of the cutter edge from the blank key, so that the cutter follows exactly the path of the feeler defined by the shape of the teeth of the sample key to be copied. As above stated the thickness of the circular feeler 37 corresponds always to that of the minimum thickness segment of the polygonal feeler 36. In this connection note should be taken that even if it happens that the spaces between the key teeth are greater than the thickness of the circular feeler, this does not jeopardize the operation when the circular feeler is in action, since the frame 21 is prevented to move laterally by the upwardly urged pin 45 acting on shaft 20 so that in such case the circular feeler 37 serves only to determine the depth of the notch to be cut. The operator can thus select according to the circumstances to use e.g. the polygonal feeler 36 only for the beginning stage of the cut and to put in action immediately afterwards the circular feeler 37 by appropriate rotation of the support 6 and swivel frame 21.

It will be understood that, when the frame 21 is prevented from lateral movements only rectangular teeth can be cut into the blank. If inclined teeth should be cut by the same machine it is possible either to press permanently downwards the blocking pin 45 by a catch acting thereon and not shown, so that when the beginning stage of the cutting operation has been effected the blocking pin 45 is unblocked by pressing it downwardly and maintaining it in depressed condition by the above mentioned catch so that the swivel frame may be laterally moved during the cutting operation by acting appropriately on the lever 30 and lever 17 to cut inclined teeth, or alternatively the support 6 may be replaced by another support which allows lateral movements so that the operation may be carried out while maintaining the swivel frame 21 laterally blocked.

It will be appreciated that the adjusting bolt 35 allows adjustment within a wide range and with great precision. This is very important, since the operator is not always in a position to fix in exact alignment the position of the sample key and the blank key so that the distance between the blank key and the cutter, and the sample key and the feeler is not the same. A fine adjustment can then be carried out by means of the adjustment bolt 35. In this way high precision key copying may be rapidly obtained on an industrial scale.

According to a preferred characteristic of the present invention, the support 6 can be rapidly replaced by another, simply by removing the screw 52 and withdrawing the pin 5. The new support can be fitted with clamps for fixing keys of another type, such as Chubb keys. Grooves can be made by a further tool 53 keyed on to the shaft 26, and also able to carry out various finishing operations.

## Claims

1. A key copying machine including an electric motor operated cutter unit (24—28) with a supporting frame (21) therefor, an adjustable feeler assembly (36, 37), and a support (6) facing said cutter unit and said feeler assembly and having means (13—16) for clamping thereon the blank key (7) and the sample key (8) and wherein means are provided allowing relative movement between said support (6) and said cutter unit and feeler assembly and wherein the feeler (37) of said feeler assembly senses the shape of said sample key and defines thereby the copying action of the cutter (28), characterized in that said feeler assembly (36, 37) has supporting means (31, 31a) allowing at least an angular movement of the feeler assembly (36, 37) independent within limits from the cutter unit (28) and its supporting frame (21) and in that contact between the cutter (28) and the blank key (7) and between the feeler (37) and the sample key (8) is achieved by respective angular movements of the supporting frame (21) and the feeler assembly (36, 37) relative to the machine base (1), allowing the feeler (37) to engage with the sample key (8) before engagement of the cutter (28) and the blank key (7).

2. A machine according to Claim 1, characterized in that it comprises further supporting means (20, 23a, 23b) allowing angular movement of said supporting frame (21) and said feeler supporting means (31, 31a) and translatory movement in a direction parallel to the axis of rotation (26) of the cutter (28) and locking means (45, 49) and unlocking means (47, 41) for such translatory movement.

3. A machine according to Claim 2, characterized in that said supporting frame (21) and said feeler supporting means (31) have adjustable stop means (34, 35) for limiting the relative angular movement thereof.

4. A machine according to Claim 3, characterized in that the cutter unit (24—28) is mounted on said frame (21) supported by a base (1) such that the frame can swivel about a horizontal axis (20) and slide along said axis (20), the support (6) being mounted such that it can swivel about an axis (5) parallel to the swivel axis (20) of the frame (21), and the feeler (36, 37) being mounted on an arm (31) which can swivel about an axis coaxial to the axis (20) of said frame (21) and comprises two portions, one portion (37) of which is circular and has a radius of curvature corresponding to that of the cutter (28), said frame (21), when the cutter (28) is in its operating position and when the feeler is in its sensing position, abutting against the arm (31) such that the circular portion (37) is concentric with the axis of the cutter (28).

5. A machine as claimed in Claim 4, characterized in that the frame (21) is axially rigid with a shaft (20) axially slidable in the base (1) by means of a lever (41) coupled to the frame by a tie rod (44), the hinging points of the lever (41) and the tie rod (44) being such as to enable the lever (41) to act on a pin (45) for axially locking the shaft (20).

6. A machine as claimed in Claim 5, characterized in that the pin (45) is housed in a bore (47) which intersects the hinging shaft (20) of the frame (21) and comprises an inclined bevel (49) which, by the action of a spring (46) acting axially on the pin, engages externally with the shaft (20), so locking it axially when the lever (41) does not act on the pin (45).

7. A machine as claimed in Claim 6, characterized in that the feeler has a non-circular portion (36) in the form of a polygon, the sides of which are of different thickness in order to penetrate between the teeth of the sample key (8) profile without slack.

8. A machine as claimed in Claim 7, characterized in that an arm (38) is disposed on the hinging axis of the frame (21), and is provided with a roller (39) for rolling on a surface of the base, between the arm and the frame (21) there being disposed a spring (40) for the resilient support of the frame in its rest position.

## Revendications

1. Machine pour la reproduction de clés, comprenant une unité de coupe (24—28) actionnée par un moteur électrique avec un châssis de support (21) pour celle-ci, un ensemble palpeur réglable (36,37), et un support (6) faisant face à ladite unité de coupe et audit ensemble palpeur et possédant des moyens (13—16) pour la fixation de l'ébauche de clé (7) et de la clé échantillon (8), dans laquelle des moyens sont prévus pour permettre un mouvement relatif entre ledit support (6), et ladite unité de coupe et l'ensemble palpeur, et dans laquelle le palpeur (37) dudit ensemble palpeur détecte la forme de ladite clé échantillon et détermine ainsi l'action de reproduction de l'organe de coupe (28), caractérisée par le fait que ledit ensemble palpeur (36,37) possède des moyens de support (31,31a) permettant au moins un mouvement angulaire de l'ensemble palpeur (36,37) indépendant dans des limites de l'unité de coupe (28) et de son châssis de support (21), et en ce que le contact entre l'organe de coupe (28) et l'ébauche de clé (7) et entre le palpeur (37) et la clé échantillon (8) est réalisé par des mouvements angulaires respectifs du châssis de support (21) et de l'ensemble palpeur (36,37) par rapport au bâti (1) de la machine de façon à permettre au palpeur (37) de venir en contact avec la clé échantillon (8) avant le contact de l'organe de coupe (28) et de l'ébauche de clé (7).

2. Machine selon la revendication 1, caractérisée par le fait qu'elle comprend en outre des moyens de support (20,23a,23b) permettant un mouvement angulaire dudit châssis de support (21) et desdits moyens de support (31,31a) du palpeur et un mouvement de translation dans une direction parallèle à l'axe de rotation (26) de l'organe de coupe (28) et des moyens de verrouillage (45,49), et des moyens de déverrouillage (47,41) pour un tel mouvement de translation.

3. Machine selon la revendication 2, caractérisée par le fait que ledit châssis de support (21) et lesdits moyens de support (31) du palpeur possèdent des moyens de butée réglables (34,35) pour limiter leur mouvement angulaire relatif.

4. Machine selon la revendication 3, caractérisée par le fait que l'unité de coupe (24—28) est montée sur ledit châssis (21) supporté par un bâti (1) de telle sorte que le châssis puisse pivoter autour de l'axe horizontal (20) et glisser le long dudit axe (20), le support (6) étant monté de façon qu'il puisse pivoter autour d'un axe (5) parallèle à l'axe de pivotement (20) du châssis (21), et le palpeur (36,37) étant monté sur un bras (31) qui peut pivoter autour d'un axe coaxial à l'axe (20) dudit châssis (21) et comprend deux parties, dont une partie (37) est circulaire et possède un rayon de courbure correspondant à celui de l'organe de coupe (28), ledit châssis (21), lorsque l'organe de coupe (28) est dans sa position de fonctionnement et que le palpeur est dans sa position de détection, venant en butée contre le bras (31) de telle sorte que la partie circulaire (37) est concentrique à l'axe de l'organe de coupe (28).

5. Machine selon la revendication 4, caractérisée par le fait que le châssis (21) est solidaire axialement d'un arbre (20) coulissant axialement sur le bâti (1) au moyen d'un levier (41) couplé au châssis par une tige de connexion (44), les points d'articulation du levier (41) et de la tige de connexion (44) étant agencés de façon à permettre au levier (41) d'agir sur un doigt (45) pour bloquer axialement le bras (20).

6. Machine selon la revendication 5, caractérisée par le fait que le doigt (45) est logé dans un alésage (47) qui coupe l'arbre d'articulation (20) du châssis (21) et comprend un biseau incliné (49) qui, par l'action d'un ressort (46) agissant axialement sur le doigt, vient en contact extérieurement avec l'arbre (20) de façon à le verrouiller axialement lorsque le levier (41) n'agit pas sur le doigt (45).

7. Machine selon la revendication 6, caractérisée par le fait que le capteur possède une partie non circulaire (36) sous la forme d'un polygone, dont les côtés ont une épaisseur différente afin de pénétrer sans jeu entre les dents du profil de la clé échantillon (8).

8. Machine selon la revendication 7, caracterisée par le fait qu'on bras (38) est disposé sur l'axe d'articulation du châssis (21), et est muni d'un galet (39) pour rouler sur une surface du bâti, un ressort (40) étant disposé entre le bras et le châssis (21) pour supporter élastiquement le châssis dans sa position de repos.

**Patentansprüche**

1. Schlüsselkopiermaschine mit einer durch einen Elektromotor angetriebenen Schneideinheit (24—28) mit einem Halterahmen (21) hierfür, einer verstellbaren Abtastvorrichtung (36, 37) und einer der Schneideinheit und der Abtastvorrichtung gegenüberliegenden Halterung (6) mit Einrichtungen (13—16) zum Anklemmen des Schlüsselrohlings (7) und des Probeschlüssels (8) an die Halterung, wobei Einrichtungen, welche eine Relativbewegung zwischen der Halterung (6) und der Schneideinheit und Abtastvorrichtung gestatten, vorgesehen sind und das Tastorgan (37) der Abtastvorrichtung die Form des Probeschlüssels ertastet und dadurch die Kopiertätigkeit der Schneidvorrichtung (28) definiert, dadurch gekennzeichnet, daß die genannte Abtastvorrichtung (36, 37) Halterungen (31, 31a), welche wenigstens eine Winkelbewegung der Abtastvorrichtung (36, 37) innerhalb Grenzen unabhängig von der Schneidvorrichtung (28) und deren Halterahmen (21) gestatten, aufweisen und daß Kontakt zwischen der Schneidvorrichtung (28) und dem Schlüsselrohling (7) und zwischen dem Tastorgan (37) und dem Probeschlüssel (8) durch entsprechende Winkelbewegungen des Halterahmens (21) und der Abstatvorrichtung (36, 37) relativ zur Maschinenbasis (1) erzielt wird, wobei das Tastorgan (37) am Probeschlüssel (8) angreifen kann, bevor die Schneidvorrichtung (28) am Schlüsselrohling (7) angreift.

2. Maschine nach Anspruch 1, dadurch gekennzeichnet, daß sie weiters Halterungen (20, 23a, 23b), die eine Winkelbewegung des genannten Halterahmens (21) und der genannten Tastorganhalterungen (31, 31a) und eine Translationsbewegung in einer Richtung parallel zur Rotationsachse (26) der Schneidvorrichtung (28) gestatten, und Blockierungseinrichtungen (45, 49) und Entblockierungseinrichtungen (47, 41) für diese Translationsbewegung aufweist.

3. Maschine nach Anspruch 2, dadurch gekennzeichnet, daß der Halterahmen (21) und die Tastorganhalterung (31) verstellbare Anschlageinrichtungen (34, 35) für die Begrenzung der relativen Winkelbewegung derselben aufweist.

4. Maschine nach Anspruch 3, dadurch gekennzeichnet, daß die Schneideinheit (24—28) am genannten Rahmen (21) montiert ist, der auf einer Basis (1) gehaltert ist, so daß der Rahmen um eine horizontale Achse (20) schwenkbar und entlang dieser Achse (20) verschiebbar ist, wobei die Halterung (6) derart montiert ist, daß sie um eine parallel zur Schwenkachse (20) des Rahmens (21) verlaufende Achse (5) schwenkbar ist, und die Abtastvorrichtung (36, 37) auf einem Arm (31) montiert ist, der um eine koaxial zur Achse (20) des Rahmens (21) verlaufende Achse schwenkbar ist und zwei Abschnitte aufweist, von denen ein Abschnitt (37) rund ist und einen Krümmungsradius besitzt, der dem der Schneidvorrichtung (28) entspricht, und wobei der Rahmen (21), wenn sich die Schneidvorrichtung (28) in Arbeitsstellung und das Tastorgan in seiner Abtaststellung befinden, gegen den Arm (31) anschlägt, so daß der runde Teil (37) zur Achse der Schneidvorrichtung (28) konzentrisch ist.

5. Maschine nach Anspruch 4, dadurch gekennzeichnet, daß der Rahmen (21) axial fest mit einer Welle (20) verbunden ist, die axial in der Basis (1) mittels eines Hebels (41) verschiebbar ist, die an den Rahmen über eine Zugstange (44) angeschlossen ist, wobei die Anlenkstellen des Hebels (41) und der Zugstange (44) derart sind, daß der Hebel (41) auf einen Bolzen (45) für die axiale Blockierung der Welle (20) wirkt.

6. Maschine nach Anspruch 5, dadurch gekennzeichnet, daß der Bolzen (45) in einer Bohrung (47) untergebracht ist, welche die Anlenkwelle (20) des Rahmens (21) schneidet und eine geneigte Abschrägung (49) besitzt, welche aufgrund der Wirkung einer axial auf den Bolzen wirkenden Feder (46) außen an der Welle (20) angreift und sie auf diese Weise axial blockiert, wenn der Hebel (41) nicht auf den Bolzen (45) wirkt.

7. Maschine nach Anspruch 6, dadurch gekennzeichnet, daß die Abtastvorrichtung einen unrunden Teil (36) in Form eines Vieleckes besitzt, dessen Seiten eine unterschiedliche Dicke besitzen, um zwischen die Zähne des Profils des Probeschlüssels (8) ohne Spiel einzugreifen.

8. Maschine nach Anspruch 7, dadurch gekennzeichnet, daß an der Anlenkachse des Rahmens (21) ein Arm (38) angeschlossen ist, der eine Rolle (39) zum Abrollen auf einer Fläche der Basis aufweist, wobei zwischen dem Arm und dem Rahmen (21) eine Feder (40) für die federnde Halterung des Rahmens in seiner Ruhestellung angeordnet ist.

Fig.1

Fig. 2

Fig. 3

0017053

Fig.4
C

33

30

25

29

28

27

53

26

21

37

31

41

22a

36

45

19a

31a

32

32a

22b

23b

20

23a

19b

38

39

1